# EUROPÄISCHE PATENTSCHRIFT

(11) **EP 0 870 955 B1**
(45) Veröffentlichungstag und Bekanntmachung des Hinweises auf die Patenterteilung: **11.09.2002**
(21) Anmeldenummer: 98104422.5
(22) Anmeldetag: 12.03.1998
(51) Int. Cl.: F16H 63/42, F16H 59/02

(54) **Wähleinrichtung mit einer Anzeigeeinrichtung**
Shift selector with a position signalling device
Levier de changement de vitesse avec un dispositif de signalisation de position

(30) Priorität: 08.04.1997 DE 19714495
(43) Veröffentlichungstag der Anmeldung: 14.10.1998
(73) Patentinhaber: Bayerische Motoren Werke Aktiengesellschaft, 80788 München (DE)
(72) Erfinder: Michael, Joerg, 85055 Ingolstadt (DE); Ehrmaier, Rudolf, 81927 München (DE); Neuner, Josef, 83064 Raubling (DE)

(56) Entgegenhaltungen:
- EP-A- 0 361 011
- EP-A- 0 616 153
- EP-A- 0 695 893
- DE-A- 3 929 268

## Beschreibung

Die Erfindung bezieht sich auf eine Wähleinrichtung mit einer Anzeigeeinrichtung, insbesondere zum Anzeigen der Betriebsstellungen eines Wählhebels eines Kraftfahrzeuggetriebes, gemäß dem Oberbegriff des Patentanspruchs 1.

Aus dem gattungsgemäßen Dokument EP 0 695 893 A2 ist eine Wähleinrichtung einer Schrittschaltung beschrieben. Durch Vor- bzw. Zurückbewegen können einzelne Gänge hoch- bzw. runtergeschaltet werden. Femer ist eine Anzeigeeinrichtung vorgesehen, in der in einem mittleren Fenster der aktuell eingelegte Gang angezeigt wird. In einem darüber liegenden Fenster ist schematisch die Anzahl der "höheren Gänge" angezeigt, in die in Abhängigkeit vom aktuellen Fahrzustand aus dem aktuell eingelegten Gang geschaltet werden kann. In einem darunter liegenden Fenster ist schematisch die Anzahl der "niedrigeren Gänge" dargestellt, in die in Abhängigkeit vom aktuellen Fahrzustand aus dem aktuell eingelegten Gang geschaltet werden kann.

Die DE 39 29 268 A1 beschreibt eine Wähleinrichtung mit einer Anzeigeeinrichtung, bei der sich das Bild der Ganganzeige in Abhängigkeit von der gewählten Fahrstufe verändert.

Es hat sich gezeigt, daß es zur Lösung der Aufgabe, daß der Fahrer, bei jeder gewählten Fahrstufe, eindeutig und schnell, die sich ihm bietenden Schaltmöglichkeiten erkennt, nicht genügt, daß sich das Bild der Ganganzeige in Abhängigkeit von der gewählten Fahrstufe ändert.

Gerade wenn der Fahrer auf diese Weise auf dem Bild der Ganganzeige den eingelegten Gang und zugleich auch die Schaltmöglichkeiten erkennen muß, muß er öfter vor dem Schalten auf der Anzeige nachschauen, welche Bewegung des Wählhebels die jetzt gewünschte Fahrstufe einlegt, da die Schaltmöglichkeiten für die selbe Bewegung des Wählhebels je nach eingelegter Fahrstufe unterschiedlich sind.

Deshalb ist es Aufgabe der Erfindung, eine Wähleinrichtung mit einer Anzeigeeinrichtung, insbesondere für ein Kraftfahrzeuggetriebe, bereitzustellen, die dem Fahrer die Wählrichtung für die gewünschte Fahrstufe anzeigt, es ihm aber auch ermöglicht, diese ohne auf die Anzeige zu schauen, einfach zu finden.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Eine Wähleinrichtung nach Anspruch 1 hat den Vorteil, daß bei einem sich selbst zurückstellenden Steuerelement, das die eingelegte Betriebsstellung ja nicht durch seine Position anzeigt, der Fahrer sehr einfach die Auslenkrichtungen für die einzelnen wahlweise anwählbaren Betriebsstellungen erlernen kann, da diese sich nicht ändern.

Bei einer vorteilhaften Ausführung der Erfindung wird die Anzeige der Auslenkrichtung zum Anwählen der bereits angewählten Betriebsstellung optisch anders dargestellt, als die Anzeige der Auslenkrichtungen für die nicht angewählten Betriebsstellungen.

Das hat den Vorteil, daß in der Anzeigeeinrichtung noch deutlicher zum Ausdruck gebracht wird, welche Betriebsstellung gerade angewählt ist.

Bei einer weiteren vorteilhaften Ausführung der Erfindung besitzt die Anzeigeeinrichtung mindestens zwei voneinander räumlich unabhängige Anzeigefelder.

So kann in dem weiteren Anzeigefeld, je nach Bedarf, eine Zusatzinformation angezeigt werden, oder es kann die Information und/oder Zusatzinformation an anderer Stelle präsentiert werden.

Bei einer bevorzugten Ausführung der Erfindung ist das Steuerelement zwischen mindestens zwei verschiedenen Betätigungspositionen hin- und herschaltbar und kann von diesen Betätigungspositionen aus, sich selbsttätig zurückstellend, in die weiteren Auslenkrichtungen bewegt werden.

Auf diese Weise können für jede zusätzlich mögliche Betätigungsposition des Steuerelements drei neue anzuwählende Betriebsstellungen hinzugefügt werden, wobei nur die Anzeigeeinrichtung um die Anzeige der neu hinzugekommenen Betätigungsposition mit ihrem Betriebsstellungen erweitert werden muß, damit jeweils alle Betriebsstellungen jeweils immer an den selben Stellen dargestellt werden können. Es sind so unzählig viele Betriebsstellungen, jede jeweils immer in der selben Richtung mit einem sich selbsttätig zurückstellenden Steuerelement anwählbar, die in der Anzeigeeinrichtung immer an den selben Stellen dargestellt werden.

Bei einer weiteren bevorzugten Ausführung der Erfindung wird die Anzeige der Betriebsstellungen mindestens einer Betätigungsposition des Steuerelements von einem Anzeigefeld angezeigt, das räumlich unabhängig von dem Anzeigefeld ist, das mindestens die verschiedenen Betätigungspositionen anzeigt.

Das hat den Vorteil, daß mehrere Betriebsstellungen angezeigt werden können, die durch Bewegen des Steuerelements in der gleichen Richtung, aus der selben Betätigungsposition heraus, nacheinander angewählt werden.

Ist bei einer Wähleinrichtung mit einer Anzeigeeinrichtung eine Betätigungsposition des Steuerelements die Ausgangslage des Wählhebels eines Automatikgetriebes in einer Betriebsart Schrittschaltbetrieb und eine andere Betätigungsposition des Steuerelements die Ausgangslage des Wählhebels des Automatikgetriebes in der Betriebsart Fahrstufenautomatik, so hat das den Vorteil, daß für ein Automatikgetriebe mit manuell betätigbarer Schrittschalteinrichtung, eine für den Fahrer einfach erlernbare Bedienungsführung bereitgestellt wird.

Ein bevorzugtes Ausführungsbeispiel der Erfindung ist der nachfolgenden Beschreibung und der zugehörigen Zeichnung näher dargestellt. Es zeigen:
- Figur 1: schematisch einen sich in seine Betätigungspositionen selbsttätig zurückstellenden Wählhebel auf der Mittelkonsole eines Kraftfahrzeuges mit zwei in Querrichtung nebeneinanderliegenden Betätigungspositionen und
- Figur 2 und Figur 3: einzelne unterschiedliche Anzeigebilder einer Anzeigeeinrichtung für einen Wählhebel entsprechend der Figur 1, mit drei Anzeigefeldern und zugeordneter, angedeutet dargestellter Wählhebelbewegung. Das untere Anzeigebild in Figur 2 ist das selbe wie das obere in Figur 3. Figur 3 setzt Figur 2 nach unten fort.

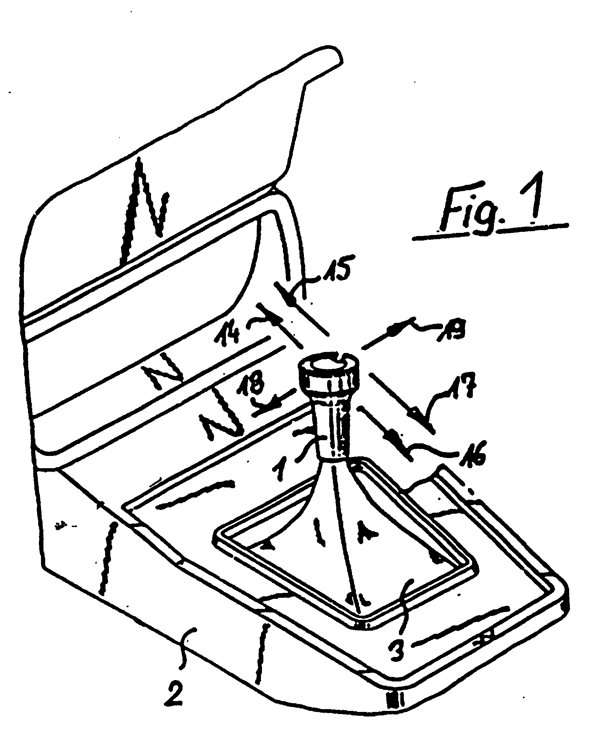

Nach Figur 1 sitzt ein Wählhebel 1 auf einer Mittelkonsole 2 eines nicht weiter dargestellten Kraftfahrzeuges. Der Wählhebel 1 dient als Wähleinrichtung zum Einlegen der einzelnen Fahrstufen eines Kraftfahrzeuggetriebes und weist hierfür durch eine Manschette 3 nicht einsehbar, an seinem unteren Ende elektrische Kontakte auf. Durch Schließen der Kontakte bei Betätigung des Wählhebels 1 werden Schaltbefehle an eine Auswerteschaltung abgegeben. Die Auswerteschaltung ist nicht Gegenstand der Erfindung und daher nicht gezeichnet und nicht näher erläutert. Es sei nur so viel erwähnt, daß sie ohne weiteres von einem Fachmann aufgebaut werden kann und vorzugsweise einen Mikrocomputer enthält. Ihre Aufgabe ist es, einmal Stellglieder für ein ebenfalls nicht dargestelltes Fahrzeuggetriebe anzusteuern. Zum anderen bestimmt sie ein Anzeigebild einer Anzeigeeinrichtung für eine Ganganzeige, im nicht gezeichneten Blickfeld des Fahrers.

Der Wählhebel 1 läßt sich in zwei parallelen und einer dazu senkrecht angeordneten Betätigungsebene verschieben. Es ergeben sich dabei vier Richtungen, die in Figur 1 mit entsprechenden Pfeilen gekennzeichnet sind. Die sechs Pfeile 14, 15, 16, 17, 18, 19 zeigen jeweils eine Bewegungsmöglichkeit für den Wählhebel 1, zum Anwählen einer neuen Betriebsstellung eines Automatikgetriebes für die Betriebsarten Schrittschaltbetrieb und Fahrstufenautomatik. Um mit vier möglichen Bewegungsrichtungen sechs anwählbare Betriebsstellungen zu erreichen sind zwei verschiedene Betätigungspositionen in Fahrzeuglängsrichtung für den Wählhebel 1 notwendig. Eine Betätigungsposition, gekennzeichnet durch die Pfeile 14 und 16, ist diejenige für die Betriebsart Schrittschaltbetrieb. Die andere Betätigungsposition, Pfeile 15 und 17, ist die Ausgangslage des Wählhebels 1 des Automatikgetriebes in der Betriebsart Fahrstufenautomatik. Zwischen diesen beiden Betätigungspositionen kann der Wählhebel 1 in Querrichtung (Richtung der Pfeile 18, 19) hin- und hergeschaltet werden.

In der Betätigungsposition Schrittschaltbetrieb können die einzelnen Gänge manuell durch Bewegen des Wählhebels 1 in Richtung des Pfeiles 14 hochgeschaltet und durch Bewegen in Richtung des Pfeiles 16 heruntergeschaltet werden. Der Wählhebel 1 stellt sich dabei immer wieder selbsttätig in seine Betätigungsposition für Schrittschaltbetrieb zurück. Die andere Betätigungsposition des Wählhebels 1, in die dieser durch Schwenken in Fahrzeugquerrichtung in Richtung des Pfeiles 19 gebracht werden kann, ist die für die Betriebsart Fahrstufenautomatik. Die Auslenkrichtungen in dieser Betätigungsposition werden in Fahrzeuglängsrichtung durch die Pfeile 15 und 17 dargestellt. Wird der Wählhebel 1 in die Richtung des Pfeiles 15 ausgelenkt, so wird die Fahrstufe R für Rückwärtsfahrbetrieb eingelegt, bei Bewegung des Wählhebels 1 in Richtung des Pfeiles 17, die Fahrstufe D, für Vorwärtsfahrbetrieb.

Von der Betätigungsposition für die Betriebsart Fahrstufenautomatik aus, kann der Wählhebel 1 zusätzlich noch in Fahrzeugquerrichtung, in Richtung des Pfeiles 19 bewegt werden. Diese Bewegung wählt die Betriebsstellung N, Neutral an, das heißt, das Fahrzeug steht still, da der Kraftfluß im Antriebsstrang unterbrochen ist. Auch in der Betriebsart Fahrstufenautomatik stellt sich der Wählhebel 1 selbsttätig zurück, nach einer Bewegung in Richtung der Pfeile 15 oder 19 oder 17. Die Bewegung des Wählhebels 1 in Fahrzeugquerrichtung, in Richtung des Pfeiles 18, veranlaßt das Umschalten aus der Betriebsart Fahrstufenautomatik in die Betriebsart Schrittschaltbetrieb.

Durch die nicht gezeichnete Auswerteschaltung wird eine im Sichtbereich des Fahrers angebrachte Anzeigeeinrichtung angesteuert, die sowohl die mit dem Wählhebel 1 gegenwärtig angewählte Betriebsstellung anzeigt, als auch die weiteren, wahlweise anwählbaren Betriebsstellungen des Kraftfahrzeuggetriebes. Dabei sind mehr Betriebsstellungen des Kraftfahrzeuggetriebes möglich, als Auslenkrichtungen für das Steuerelement, den Wählhebel 1, vorhanden sind. Desweiteren ist die Anzeige jeder einzelnen, nicht angewählten Betriebsstellung, immer an der selben Stelle der Anzeigeeinrichtung dargestellt. Beim Anwählen einer neuen Betriebsstellung durch den Wählhebel 1, wird dieser, jeweils für eine bestimmte Betriebsstellung, jeweils immer in die selbe Richtung ausgelenkt.

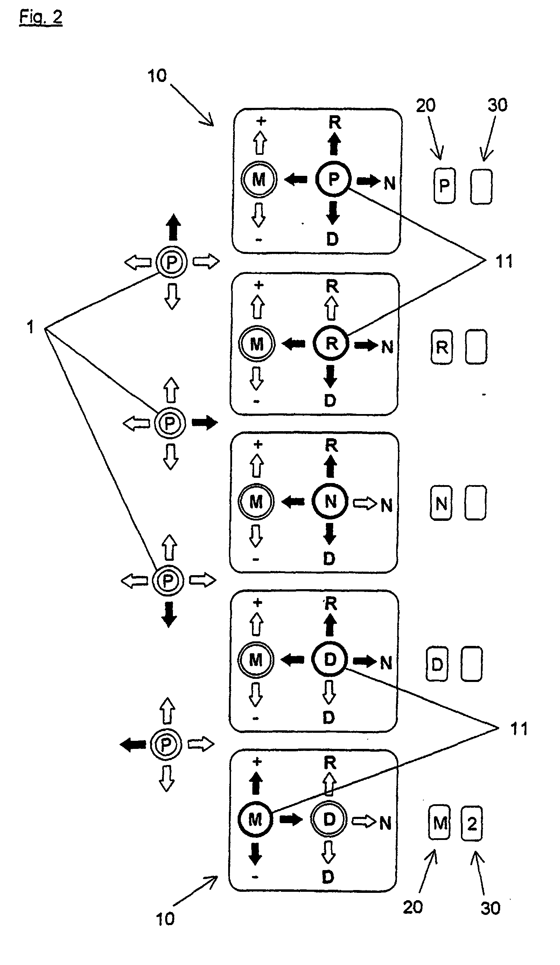

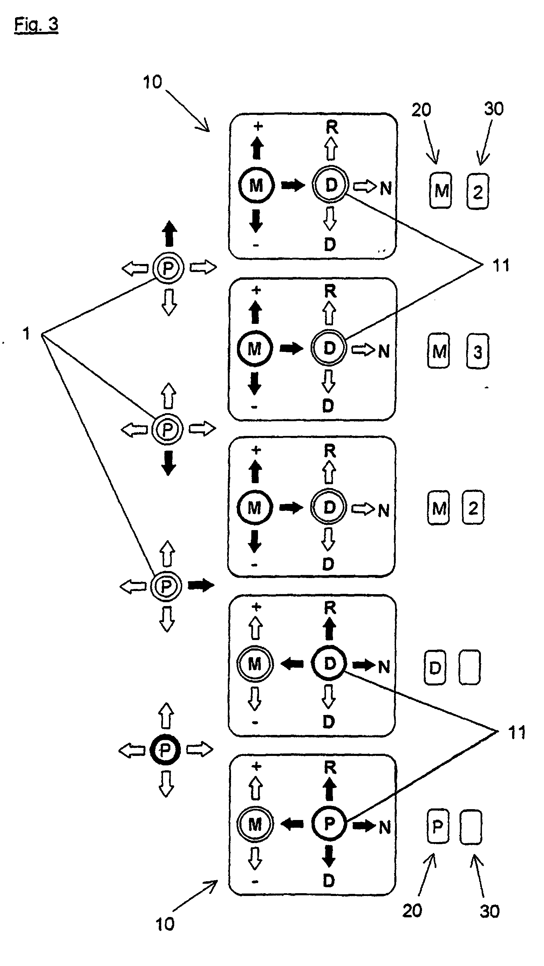

Figur 2 und Figur 3 zeigen dies anhand neun verschiedener Anzeigebilder der Anzeigeeinrichtung im Sichtbereich des Fahrers. Zur übersichtlicheren Darstellung ist schematisch in der linken Spalte von Figur 2 und Figur 3 der Wählhebel 1 in seiner jeweiligen Betätigungsposition gezeigt, mit den durch vier Pfeile angedeuteten möglichen Bewegungsrichtungen zum Anwählen einer anderen Betriebsstellung. Dabei ist jeweils der Pfeil der Richtung schwarz ausgemalt gezeichnet, in die der Wählhebel 1 für das Anwählen einer neuen Betriebsstellung bewegt wird, um das nächstfolgende, darunterliegende Anzeigebild der danebenliegenden Spalte zu erhalten.

Dieses jeweils dazugehörige Anzeigebild im Anzeigefeld 10 der Anzeigeeinrichtung ist in der zweiten Spalte von Figur 2 und Figur 3 dargestellt. Dabei zeigt das Anzeigebild über dem jeweiligen Wählhebel 1 aus der linken Spalte die Betriebsstellung vor der Ausführung seiner Schaltbewegung und das Anzeigebild darunter, das der neu angewählten Betriebsstellung nach seiner Wählbewegung. Die beiden Spalten noch weiter rechts zeigen jeweils ein weiteres Anzeigefeld 20 und ein zusätzliches Anzeigefeld 30, die räumlich unabhängig von dem Anzeigefeld 10 sind, das die verschiedenen Betätigungspositionen anzeigt. Dabei werden in dem weiteren Anzeigefeld 20 die einzelnen Fahrstufen der Betriebsart Fahrstufenautomatik angezeigt, wenn der Wählhebel 1 sich in der Betätigungsposition für die Fahrstufenautomatik befindet. Ist er in der Betätigungsposition für die Betriebsart Schrittschaltbetrieb, so zeigt das weitere Anzeigefeld 20 mit dem Buchstaben M, für manuell, diese Betätigungsposition an.

Das zusätzliche Anzeigefeld 30 zeigt in der Betätigungsposition Schrittschaltbetrieb, mit der entsprechenden Zahl, den jeweils eingelegten Gang an. Befindet sich der Wählhebel 1 in der Betriebsart Fahrstufenautomatik, wird im zusätzlichen Anzeigefeld 30 kein Anzeigebild sichtbar.

Im ersten Anzeigebild des Anzeigefeldes 10, der Figur 2, von oben, ist dargestellt, daß sich das Kraftfahrzeuggetriebe in der Betätigungsposition Fahrstufenautomatik mit der angewählten Betriebsstellung Fahrstufe P befindet. Im Anzeigebild wird durch einen Kreis 11 angedeutet der Wählhebel 1 dargestellt, in dessen Mitte durch P die eingelegte Fahrstufe angezeigt wird, während die schwarz ausgelegten Pfeile die möglichen Bewegungsrichtungen für den Wählhebel 1 zeigen, an deren Pfeilspitze die jeweilige Fahrstufe dargestellt ist, die angewählt wird, wenn der Wählhebel 1 in die Richtung des jeweiligen Pfeiles bewegt wird. Aus der angewählten Betriebsstellung P kann also entweder R, D, N oder M eingelegt werden. Dabei bedeutet das Schwenken des Wählhebels nach links in Richtung der Anzeige M, das Einlegen der Betriebsart Schrittschaltbetrieb in der anderen Betätigungsposition.

Wie die erste Spalte zeigt, wird der Wählhebel 1 nun in Richtung des schwarz ausgemalten Pfeiles nach oben bewegt, zum Anwählen von R, der Rückwärtsfahrstufe (Anzeigefeld 10). Im zweiten Anzeigebild des Anzeigefeldes 10 wird nun im Kreis 11 die jetzt eingelegte Fahrstufe R angezeigt, während gleichzeitig der Pfeil in Richtung R optisch anders dargestellt wird, da ein Anwählen der Rückwärtsfahrstufe bei bereits eingelegter Rückwärtsfahrstufe wenig sinnvoll ist. Diese optisch veränderte Darstellung wird in der Zeichnung des Anzeigefeldes 10 angedeutet durch einen nicht ausgemalten Pfeil in Richtung R, was in der gleichen Weise beim Anzeigebild zum Beispiel durch eine andersfarbige Beleuchtung des Pfeiles verwirklicht werden kann. Im weiteren Anzeigefeld 20 wechselt die Anzeige ebenfalls von P, der Parkstellung, auf R, der Rückwärtsfahrstellung. Da sich der Wählhebel 1 nicht in der Betätigungsposition für die Betriebsart Schrittschaltbetrieb befindet, wird im zusätzlichen Anzeigefeld 30 keine Anzeige sichtbar.

Das Bewegen des Wählhebels 1 nach rechts, im zweiten Bild der ersten Spalte, angedeutet durch den ausgezogenen Pfeil nach rechts, legt die nächste Fahrstufe N ein. Das bewirkt, daß im Anzeigefeld 10 (drittes Bild von oben) in der Mitte des Kreises 11 und im weiteren Anzeigefeld 20 "N" angezeigt wird. Es ist nun die Fahrstufe Neutral eingelegt. Dadurch wird der Pfeil in Richtung N optisch verändert dargestellt und der Pfeil in Richtung R bekommt wieder sein ursprüngliches Aussehen.

Bei der nächsten Bewegung des Wählhebels 1, nach unten, in Richtung D, wird die Fahrstufe Vorwärtsfahrt eingelegt Im Kreis 11 im Anzeigebild des Anzeigefeldes 10 und im weiteren Anzeigefeld 20 erscheint die Darstellung D. Der Pfeil in Richtung D im Anzeigebild des Anzeigefeldes 10 wird optisch verändert dargestellt.

Ein Verschwenken des Wählhebels 1 aus der Betätigungsposition für die Betriebsart Fahrstufenautomatik in die Betätigungsposition für die Betriebsart Schrittschaltbetrieb nach links, läßt die gesamten Wählmöglichkeiten in der Betätigungsposition für die Betriebsart Fahrstufenautomatik optisch verändert erscheinen, da diese nicht mehr anwählbar sind (fünftes Bild des Anzeigefeldes 10 von oben). Stattdessen werden die Wählmöglichkeiten in der Betriebsart Schrittschaltbetrieb dargestellt. Im zusätzlichen Anzeigefeld 30 wird die in der Betriebsart Schrittschaltbetrieb eingelegte Fahrstufe "2" angezeigt, im weiteren Anzeigefeld 20 zeigt M, daß der Schrittschaltbetrieb ausgewählt wurde. Im Kreis 11, der seine Position nach links in die Betriebsart Schrittschaltbetrieb gewechselt hat, wird mit M angezeigt, daß ein manuelles Schalten im Schrittschaltbetrieb möglich ist. Beim Wechsel zwischen den Betriebsarten wird in der Betriebsart Schrittschaltbetrieb genau der Gang übernommen, der in der Betriebsart Fahrstufenautomatik eingelegt war.

Nach unten wird die Figur 2 ab dem fünften Bild durch das zweite Bild der Figur 3 fortgesetzt. Zur besseren Verständlichkeit ist das fünfte Bild aus Figur 2 als erstes Bild in Figur 3 nochmals dargestellt.

Wird, wie in Figur 3, erste Spalte, dargestellt, der Wählhebel 1 in Richtung des geschwärzten Pfeiles nach oben zum "+" (Anzeigefeld 10), bewegt, so wird der nächsthöhere Gang im Kraftfahrzeuggetriebe eingelegt. Im Anzeigebild des Anzeigefeldes 10 und in dem des weiteren Anzeigefeldes 20 wird nichts verändert, aber das zusätzliche Anzeigefeld 30 zeigt "3" für den dritten Gang (zweites Bild der Anzeigefelder 10,20,30, von oben, in Figur 3). Wollte man jetzt manuell weiter hochschalten, müßte der Wählhebel 1 einfach auf die selbe Weise in Richtung "+" geschwenkt werden.

Beim Verschwenken des Wählhebels 1 in Richtung "-", wird wieder der zweite Gang eingelegt, was im zusätzlichen Anzeigefeld 30 durch eine "2" dargestellt wird, wie das dritte Bild der Anzeigefelder 10,20,30 in Figur 3 zeigt.

Die Betätigungsposition für den Wählhebel 1 in der Betriebsart Fahrstufenautomatik wird wieder erreicht, wenn der Wählhebel 1 nach rechts geschwenkt wird. Dadurch wandert der Kreis 11, als Anzeige für die Position des Wählhebels 1 im Anzeigebild des Anzeigefeldes 10, wieder nach rechts und die Auswahlmöglichkeiten in dieser Betriebsart werden durch die unterlegten Pfeile wieder dargestellt, während die Pfeile in der Betriebsart Schrittschaltbetrieb optisch so dargestellt werden, daß eine Möglichkeit des Anwählens aus dem Anzeigebild des Anzeigefeldes 10 nicht hervorgeht. Im Kreis 11 des Anzeigebildes des Anzeigefeldes 10 und in der Anzeige des weiteren Anzeigefeldes 20 wird die jetzt angewählte Betriebsstellung, Fahrstufe D, dargestellt. Die Anzeige einer Gangstufe im zusätzlichen Anzeigefeld 30 ist nun nicht mehr nötig. (viertes Bild der Anzeigefelder 10,20,30, von oben, in Figur 3).

Als nächste Betriebsstellung soll nun die Fahrstufe P ausgewählt werden, in der Betriebsart Fahrstufenautomatik. Dies ist nicht möglich durch die Bewegung des Wählhebels 1 in irgendeine Richtung, sondern, wie in Spalte 1, am Wählhebel 1 angedeutet durch optische Hervorhebung der Anzeige P gezeichnet, über einen anderen Schalter. Dieser kann zum Beispiel zusätzlich am Wählhebel 1 angebracht sein. Oder das Einlegen erfolgt automatisch durch das Drehen eines Zündschlüssels im Zündschloß. Wird P zum Beispiel am Wählhebel 1 eingelegt, ändert sich das Anzeigebild des Anzeigefeldes 10 im Kreis 11 auf P, ebenso im weiteren Anzeigefeld 20 (fünftes Bild der Anzeigefelder 10,20,30, von oben, in Figur 3).

Die in Figur 2 und Figur 3 von oben nach unten gezeichneten verschiedenen Anzeigebilder stellen nur eine Auswahl dar und sollen das Prinzip der Anzeigeeinrichtung in Verbindung mit der Wähleinrichtung erläutern. Dabei wird gezeigt, daß die Anzeigeeinrichtung so aufgebaut ist, daß die Anzeige der gegenwärtig angewählten Betriebsstellung und die Anzeige jeder einzelnen weiteren anwählbaren Betriebsstellung immer an der selben Stelle der Anzeigeeinrichtung dargestellt ist. Desweiteren muß das Steuerelement, der Wählhebel 1, für das Anwählen jeweils einer bestimmten Betriebsstellung, jeweils immer in die selbe Richtung ausgelenkt werden.

## Patentansprüche

1. Wähleinrichtung mit einer Anzeigeeinrichtung (10), insbesondere für ein Kraftfahrzeug, mit der, durch Auslenken eines sich mindestens für bestimmte Auslenkrichtungen selbsttätig zurückstellenden Steuerelements (1), insbesondere eines Wählhebels, eine gegenwärtig angewählte Betriebsstellung (P,R,N,D,M) und weitere, wahlweise anwählbare Betriebsstellungen (P,R,N,D,M), eines in mehrere Betriebsstellungen (P,R,N,D,M) steuerbaren Geräts, insbesondere eines Kraftfahrzeuggetriebes, so angezeigt werden, dass die gegenwärtig angewählte Betriebsstellung (P,R,N,D,M) und die sich daraus ergebenden Schaltmöglichkeiten in weitere, nicht angewählte Betriebsstellungen (P,R,N,D,M) immer dargestellt sind, wobei mehr Betriebsstellungen (P,R,N,D,M) des Geräts möglich sind als Auslenkrichtungen für das Steuerelement (1) vorhanden sind, wobei das Steuerelement (1) für das Anwählen jeweils einer bestimmten Betriebsstellung (P,R,N,D,M) jeweils immer in dieselbe Richtung ausgelenkt werden muss,
**dadurch gekennzeichnet, dass**
das Steuerelement (1) zwischen mindestens zwei verschiedenen Betätigungspositionen hin- und herschaltbar ist, wobei der einen Betätigungsposition mehrere Betriebsstellungen (P,R,N,D) zugeordnet sind,
wobei der anderen Betätigungsposition eine Betriebsstellung (M) zugeordnet ist,
wobei die Anzeigeeinrichtung (10) für jede Betätigungsposition eine separate Anzeige (11) aufweist,
wobei die gegenwärtig angewählte Betriebsstellung (P,R,N,D,M) der Betätigungspositionen immer an derselben der jeweiligen Betätigungsposition individuell zugeordneten Anzeige (11) der Anzeigeeinrichtung (10) dargestellt ist,
dass Anzeigen jeder weiteren aus der gegenwärtigen Betriebsstellung (P,R,N,D,M) anwählbaren Betriebsstellung (P,R,N,D,M) immer an derselben Stelle der Anzeigeeinrichtung (10) dargestellt sind.

2. Wähleinrichtung mit einer Anzeigeeinrichtung (10) nach Anspruch 1, **dadurch gekennzeichnet, dass** die Anzeige der Auslenkrichtung zum Anwählen der bereits angewählten Betriebsstellung (P,R,N,D,M) optisch anders dargestellt wird, als die Anzeige der Auslenkrichtungen für die nicht angewählten Betriebsstellungen (P,R,N,D,M).

3. Wähleinrichtung mit einer Anzeigeeinrichtung (10) nach Anspruch 1 oder 2, **dadurch gekennzeichnet, dass** die Anzeigeeinrichtung (10) mindestens zwei voneinander räumlich unabhängige Anzeigefelder (10, 20, 30) besitzt.

4. Wähleinrichtung mit einer Anzeigeeinrichtung (10) nach einem der Ansprüche 1 bis 3, **dadurch gekennzeichnet, dass** das Steuerelement (1) von den Betätigungspositionen aus, sich selbsttätig zurückstellend, in die weiteren Auslenkrichtungen bewegt werden kann.

5. Wähleinrichtung mit einer Anzeigeeinrichtung (10) nach Anspruch 4, **dadurch gekennzeichnet, dass** die Anzeige der Betriebsstellungen (P,R,N,D,M) mindestens einer Betätigungsposition des Steuerelements (1) von dem Anzeigefeld (20) angezeigt wird, das räumlich unabhängig von dem Anzeigefeld (10) ist, das die verschiedenen Betätigungspositionen anzeigt.

6. Wähleinrichtung mit einer Anzeigeeinrichtung (10) nach Anspruch 4 oder 5, **dadurch gekennzeichnet, dass** die eine Betätigungsposition des Steuerelements die Ausgangslage des Wählhebels (1) eines Automatikgetriebes in einer Betriebsart Schrittschaltbetrieb ist.

7. Wähleinrichtung mit einer Anzeigeeinrichtung (10) nach Anspruch 6, **dadurch gekennzeichnet, dass** die andere Betätigungsposition des Steuerelements die Ausgangslage des Wählhebels (1) des Automatikgetriebes in der Betriebsart Fahrstufenautomatik ist.

## Claims

1. A selector means comprising a display means (10), especially for a motor vehicle, wherein, by shifting a control element (1), especially a selector lever, which automatically returns at least after being shifted in certain directions, an operating position (P, R, N, D, M) chosen for the present and other optionally choosable operating positions (P, R, N, D, M) of an apparatus movable into a number of operating positions (P, R, N, D, M), especially a vehicle gear unit, are indicated in such a way that the operating position chosen at present (P, R, N, D, M) and the resulting possible changes to other, non-selected operating positions (P, R, N, D, M) are always shown, wherein the number of operating positions (P, R, N, D, M) of the apparatus are greater than the number of directions for shifting the control element (1), wherein the control element (1) must always be shifted in the same direction in order to select a given operating position (P, R, N, D, M),
**characterised in that**
the control element (1) is movable in reciprocation between at least two different actuating locations, wherein a number of operating positions (P, R, N, D) are associated with one actuating location,
wherein one operating position (M) is associated with the other actuating location,
wherein the display means (10) has a separate display (11) for each actuating location,
wherein the operating position (P, R, N, D, M) selected at present out of the actuating locations is always shown in the same display (11) by the display means (10) individually associated with the respective actuating location, and displays of any other operating position (P, R, N, D, M) selectable starting from the present operating position (P, R, N, D, M) are always shown at the same place on the display means (10).

2. A selector means comprising a display means (10) according to claim 1, **characterised in that** the display of the direction for gear-shifting in order to select the already-selected operating position (P, R, N, D, M) is given a different optical appearance from the display of the gear-shifting directions for the non-selected operating positions (P, R, N, D, M).

3. A selector means comprising a display means (10) according to claim 1 or claim 2, **characterised in that** the display means (10) has at least two spatially separate, independent display compartments (10, 20, 30).

4. A selector means comprising a display means (10) according to any of claims 1 to 3, **characterised in that** the control element (1), starting from the actuating locations and automatically returning, can be moved in the other gear-shifting directions.

5. A selector means comprising a display means (10) according to claim 4, **characterised in that** the display of the operating positions (P, R, N, D, M) for at least one actuating location of the control element (1) are shown by that display compartment (20), spatially independent of the display compartment (10), which shows the various actuating locations.

6. A selector means comprising a display means (10) according to claim 4 or claim 5, **characterised in that** one actuating location of the control element is the starting position of the selector lever (1) of an automatic gear unit in a step-by-step mode.

7. A selector means comprising a display means (10) according to claim 6, **characterised in that** the other actuating location of the control element is the starting position of the selector lever (1) of the automatic gear unit in the automatic gear shift mode.

## Revendications

1. Installation de sélection avec une installation d'affichage (10), notamment pour un véhicule automobile, à l'aide de laquelle, le déplacement d'un élément de commande (1) qui revient automatiquement pour certaines directions de débattement, notamment un levier sélecteur, permet d'afficher la position de fonctionnement choisie présentement (P, R, N, D, M) et d'autres positions de fonctionnement que l'on peut sélectionner (P, R, N, D, M) d'un appareil commandé dans l'une des différentes positions de fonctionnement (P, R, N, D, M), notamment une boîte de vitesses d'automobile, de façon que la position de fonctionnement sélectionnée actuellement (P, R, N, D, M) et les possibilités de commutation qui en résultent soient toujours représentées dans d'autres positions de fonctionnement non sélectionnées (P, R, N, D, M), l'appareil ayant davantage de positions de fonctionnement possibles (P, R, N, D, M) que de directions de déplacement de l'élément de commande (1),
l'élément de commande (1) devant toujours être déplacé dans la direction correspondante au choix d'une position de fonctionnement déterminées (P, R, N, D, M),
**caractérisée en ce que**
l'élément de commande (1) peut commuter entre au moins deux positions d'actionnement différentes,
plusieurs positions de fonctionnement (P, R, N, D) étant associées à l'une des positions d'actionnement,
une position de fonctionnement (M) étant associée à l'autre position d'actionnement,
l'installation d'affichage (10) présente un affichage (11) séparé pour chaque position d'actionnement,
la position de fonctionnement choisie présentement (P, R, N, D, M) parmi les positions d'actionnement est représentée toujours sur le même affichage (11) de l'installation d'affichage (10) associée individuellement à la position d'actionnement respective,
l'affichage de chaque autre position de fonctionnement (P, R, N, D, M) que l'on peut choisir à partir de la position de fonctionnement présente (P, R, N, D, M) est toujours représenté au même endroit de l'installation d'affichage (10).

2. Installation de sélection comportant une installation d'affichage (10) selon la revendication 1,
**caractérisée en ce que**
l'affichage de la direction de déplacement sélectionnée de la position de fonctionnement (P, R, N, D, M) déjà sélectionnée est représenté optiquement différemment de l'affichage des directions de déplacement pour les positions non sélectionnées (P, R, N, D, M).

3. Installation de sélection comportant une installation d'affichage (10) selon l'une quelconque des revendications 1 ou 2,
**caractérisée en ce que**
l'installation d'affichage (10) possède au moins deux champs d'affichage (10, 20, 30) indépendants, séparés dans l'espace.

4. Installation de sélection comportant une installation d'affichage (10) selon l'une quelconque des revendications 1 à 3,
**caractérisée en ce que**
l'élément de commande (1) peut être déplacé à partir des positions d'actionnement, avec retour automatique, dans les autres directions de déplacement.

5. Installation de sélection comportant une installation d'affichage (10) selon la revendication 4,
**caractérisé en ce que**
l'affichage des positions de fonctionnement (P, R, N, D, M) d'au moins une position d'actionnement d'un élément de commande (1) est assuré par le champ d'affichage (20) qui est indépendant dans l'espace par rapport au champ d'affichage (10) et qui indique les différentes positions d'actionnement.

6. Installation de sélection comportant une installation d'affichage (10) selon l'une quelconque des revendications 4 ou 5,
**caractérisé en ce qu'**
une position d'actionnement de l'élément de commande est la position de repos du levier sélecteur (1) d'une boîte de vitesses automatique en mode séquentiel.

7. Installation de sélection comportant une installation d'affichage (10) selon la revendication 6,
**caractérisé en ce que**
l'autre position d'actionnement de l'élément de commande est la position de repos du levier sélecteur (1) de la boîte de vitesses automatique en fonctionnement comme boîte automatique.
